# FASCICULE DE BREVET EUROPEEN

(11) **EP 4 132 723 B1**
(45) Date de publication et mention de la délivrance du brevet: **03.04.2024**
(21) Numéro de dépôt: 21723330.3
(22) Date de dépôt: 06.04.2021
(51) Int. Cl.: B05B 11/10, F16B 29/00, F16B 33/00

(54) **DISTRIBUTEUR DE PRODUIT FLUIDE**
FLUIDSPENDER
FLUID DISPENSER

(30) Priorité: 07.04.2020 FR 2003465
(43) Date de publication de la demande: 15.02.2023
(73) Titulaire: APTAR France SAS, 27110 Le Neubourg (FR)
(72) Inventeur: BERANGER, Stéphane, 27400 SURTAUVILLE (FR); MILIAN, Alex, 27160 LES BAUX DE BRETEUIL (FR)
(74) Mandataire: CAPRI
(86) Numéro de dépôt international: PCT/FR2021/050594
(87) Numéro de publication internationale: WO 2021/205106

(56) Documents cités:
- WO-A1-2009/150351
- DE-A1-102011 015 004

## Description

La présente invention concerne un distributeur de produit fluide comprenant un réservoir de produit fluide pourvu d'un col fileté extérieurement et définissant intérieurement une ouverture communiquant avec l'intérieur du réservoir. Le distributeur comprend en outre une tête de distribution montée sur le col du réservoir, la tête comprenant un organe de distribution telle qu'une pompe ou une valve, un poussoir pour actionner l'organe de distribution et un organe de fixation en prise à la fois avec le col fileté du réservoir et l'organe de distribution. De tels distributeurs sont fréquemment utilisés dans les domaines de la parfumerie, de la cosmétique ou encore de la pharmacie.

Dans l'art antérieur, on connait le document WO2009/150351 qui décrit un distributeur comprenant un réservoir avec un col fileté et un organe de fixation comprenant une jupe déformable et malléable destinée à venir en prise avec le col fileté, et une frette rigide engagée autour de la jupe pour pousser radialement la jupe contre le col fileté de manière à déformer la jupe contre le filet du col pour créer une empreinte de filet dans la jupe. La jupe de l'organe de fixation est donc amenée en prise avec le col fileté par un déplacement radial vers l'intérieur, et non pas un déplacement axial par rotation, comme c'est le cas avec les jupes filetées classiques. Avant le premier montage de la jupe sur un col fileté, la jupe ne comporte aucune empreinte de filet : ce n'est que lors de la poussée radiale effectuée à l'aide de la frette que l'empreinte de filet est créée par déformation plastique de la jupe déformable et malléable. Le matériau constitutif de la jupe déformable et malléable flue plastiquement autour des filets du col du réservoir pour atteindre un état final avec une empreinte de filet satisfaisante.

Ce distributeur de l'art antérieur permet ainsi de monter la jupe autour du col sans rotation et permet ensuite de retirer la jupe du col par simple dévissage. Ce distributeur répond donc à une exigence de recyclage en permettant la séparation de ces éléments constitutifs. Cependant, il a été constaté empiriquement qu'il n'est pas possible de revisser la jupe sur col pour plusieurs raisons. La première étant que le contact entre la jupe et le col est extrêmement intime et serré, de sorte qu'il n'y a absolument aucun jeu. La seconde vient du fait que la jupe se détend légèrement lorsqu'elle est retirée du col du fait de sa malléabilité. La troisième raison est liée au fait que la jupe est formée de pattes souples séparées par des fentes : lorsque l'on veut revisser la jupe, ses pattes viennent accrocher le filet du col et se mettent en travers, rendant alors impossible le revissage. Il n'est donc pas possible de réutiliser ce distributeur, qui ne répond pas à l'exigence actuelle de durabilité.

La présente invention a pour but de remédier aux inconvénients précités de l'art antérieur en définissant un distributeur de produit fluide dont l'organe de fixation peut être revissé sur le col après dévissage. L'utilisateur ne doit avoir à faire plusieurs tentatives pour engager les empreintes de la jupe sur les filets du col.

Pour ce faire, la présente invention propose que le ou les filet(s) hélicoïdal(aux) du col présente(nt) comprend/comprennent une entame de filet supérieure, une fin de filet inférieure et une portion intermédiaire qui présente une section transversale qui décroit dans le sens du dévissage et/ou croit dans le sens du vissage, de telle sorte que le couple de dévissage décroit et/ou le couple de revissage croit. Ainsi, les empreintes de la jupe qui viennent en premier en prise avec les filets du col lors du revissage sont plus grandes que les débuts de filets, ce qui permet de créer un jeu entre les empreintes et les filets. Ce jeu va faciliter l'engagement de la jupe sur les filets lors du revissage. Bien entendu, ce jeu va diminuer au fur et à mesure du revissage pour disparaitre en fin de revissage. L'imbrication des filets dans les empreintes peut être assimilée à un contact cône dans cône, étant donné que les filets et les empreintes présentent tous deux une configuration « conique » ou « effilée », si l'on fait abstraction de leur courbure hélicoïdale. Le revissage nécessite donc un couple croissant, qui donne à l'utilisateur une sensation justifiée de suffisance et de qualité.

Il faut remarquer que cette configuration particulière des filets du col trouve un avantage tout particulier avec le distributeur du document WO2009/150351. En effet, c'est la configuration « conique » ou « effilée » des filets qui va donner la même configuration en négatif aux empreintes de la jupe, ce qui permet de créer ce jeu avantageux entre les empreintes et les filets en début de revissage.

Avantageusement, au moins la moitié de la longueur de la portion intermédiaire présente une section transversale qui décroit dans le sens du dévissage et croit dans le sens du vissage, de telle sorte que le couple de dévissage décroit et le couple de revissage croit. D'autre part, le filet hélicoïdal, au niveau de la jonction entre la fin de filet inférieure et la portion intermédiaire, peut présenter une section transversale maximale. Selon un mode de réalisation, la portion intermédiaire peut comprendre une partie inférieure (12MC) de section transversale maximale constante. Cela signifie que la section transversale n'est pas forcément croissante sur toute la longueur de la portion intermédiaire. Une plage de section terminale constante peut servir à indiquer à l'utilisateur que le revissage est suffisant.

Avantageusement, la portion intermédiaire présente une hauteur axiale et une épaisseur radiale, au moins l'une de ces deux grandeurs décroit dans le sens du dévissage et croit dans le sens du vissage. On peut donc agir sur ces deux grandeurs, ou seulement sur une seule, pour faire varier la section transversale du ou des filet(s). A titre indicatif, la hauteur axiale peut varier d'au moins 20%, avantageusement entre 1 mm et 1,5 mm. Alternativement ou cumulativement, l'épaisseur radiale peut varier d'au moins 30% et de préférence de 50%, avantageusement entre 0,4 mm et 0,6 mm. Le rapport de la hauteur axiale à l'épaisseur radiale peut être de l'ordre de 2 à 3.

Selon un mode de réalisation avantageux, le col comprend au moins deux filets hélicoïdaux, avantageusement trois ou quatre. L'accostage de la jupe sur le col est d'autant plus stable que le nombre de filets est grand, puisque l'on multiplie des points d'appui.

Selon une autre caractéristique intéressante, les filets hélicoïdaux peuvent se chevaucher.

Avantageusement, ledit au moins un filet hélicoïdal comprend deux flancs latéraux inclinés et un sommet sensiblement plat et cylindrique, de sorte que le filet hélicoïdal présente une section transversale de configuration générale trapue. Cela augmente la solidité des filets, qui vont devoir supporter des couples divers non calibrés, puisqu'exercés par les utilisateurs.

Selon une forme de réalisation pratique avantageuse, la jupe est réalisée en une matière plastique et les filets hélicoïdaux sont en verre, la jupe comprenant des pattes souples séparées par des fentes, chaque patte souple étant pourvue intérieurement d'au moins un bossage destiné à être déformé par le filet hélicoïdal du col, les bossages étant allongés et s'étendent transversalement au filet hélicoïdal.

L'esprit de la présente invention réside dans la forme effilée sur une partie significative de la longueur des filets de col, qui permet de réaliser des empreintes correspondantes, ce qui permet de créer un jeu en début de revissage qui est mis à profit pour entamer facilement sans tâtonnement le revissage.

L'invention sera maintenant plus amplement décrite en référence aux dessins joints, donnant à titre d'exemples non limitatifs, plusieurs modes de réalisation de l'invention.

Sur les figures :
Les figures 1 à 4 sont des vues représentant un distributeur de produit fluide selon le document WO2009/150351, au cours de différentes étapes de montage et de démontage successives,
La figure 5 est une vue en plan latérale d'un col fileté selon l'invention,
La figure 6 est une vue en coupe transversale verticale à travers le col fileté de la figure 5,
Les figures 7a et 7b sont des vues agrandies des détails entourés A et B de la figure 6,
Les figures 8a et 8b sont des vues en perspective montrant l'engagement de la jupe avec le col fileté respectivement dans le cadre du document WO2009/150351 et de la présente invention, et
Les figures 9a, 9b et 9c illustrent respectivement trois autres modes de réalisation pour des filets de col selon l'invention.

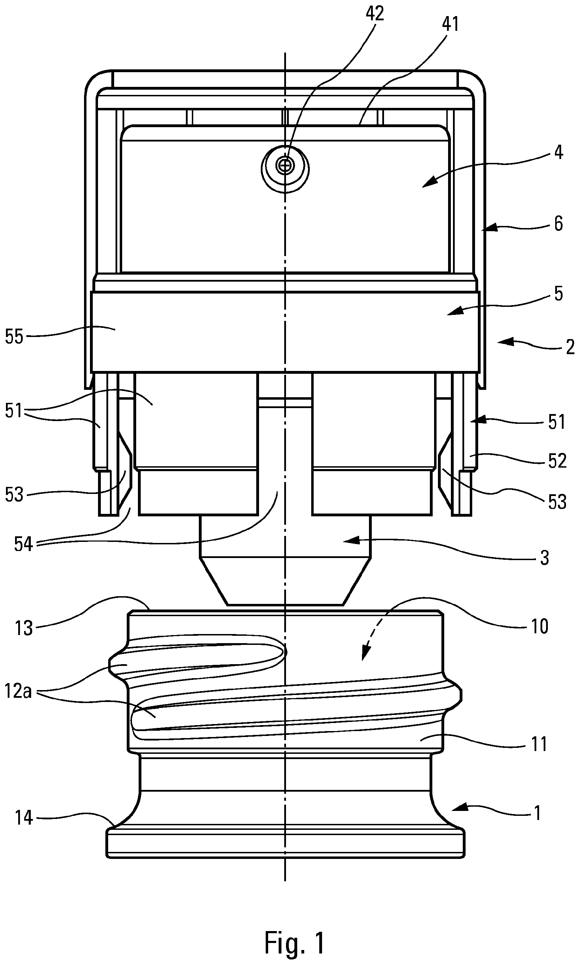

Le distributeur de produit fluide, représenté sur les figures 1 à 4 pour illustrer l'art antérieur correspondant au document WO2009/150351, comprend deux parties ou sous-ensembles distincts, à savoir un réservoir de produit fluide 1 et une tête de distribution 2 destinée à être montée sur le réservoir pour constituer ensemble le distributeur.

Le réservoir de produit fluide 1 n'est représenté que partiellement sur les figures 1 à 4. Seul le col 11 et une partie de l'épaulement 14 du réservoir 1 sont représentés sur les figures. Le col 11 fait saillie axialement vers le haut à partir de l'épaulement 14 qui forme déjà une partie du corps du réservoir (non représenté). Le col 11 définit intérieurement une ouverture 10 qui fait communiquer l'intérieur du réservoir avec l'extérieur. L'ouverture 10 est délimitée par un bord supérieur annulaire 13 du col 11. Extérieurement, le col 11 forme un ou plusieurs filets hélicoïdaux 12a, qui se présentent sous la forme d'une ou de plusieurs nervures saillantes disposées de manière hélicoïdale. Les filets 12a peuvent s'étendre sur toute ou partie de la périphérie du col 11. Les filets 12a peuvent être continus, ou au contraire interrompus. Le but des filets 12a est de permettre un mouvement classique de rotation combiné à un déplacement axial. On peut parler d'un mouvement de vissage/dévissage. Le réservoir 1 peut être réalisé en n'importe quel matériau permettant d'obtenir un col rigide et indéformable. Le réservoir peut notamment être réalisé en verre, en métal ou encore dans une matière plastique rigide.

La tête de distribution 2 comprend essentiellement trois organes constitutifs, à savoir un organe de distribution 3 qui peut être une pompe ou une valve, un poussoir 4 monté sur l'organe de distribution 3 pour l'actionner et un organe de fixation 5,6 en prise à la fois avec le col fileté 11 du réservoir et l'organe de distribution 3. On se référera maintenant indifféremment aux figures pour décrire la structure de la tête de distribution 2.

L'organe de distribution 3 comprend un corps 30 définissant à une de ses extrémités une entrée 31 pour le produit fluide en provenance du réservoir. Le corps 30 forme une collerette de fixation 37 qui fait saillie radialement vers l'extérieur. L'organe de distribution 3 comprend également une tige d'actionnement 32 qui fait saillie hors du corps 30 vers le haut et qui est déplaçable axialement en va-et-vient par rapport au corps. Un ressort de rappel 33 sollicite la tige d'actionnement 32 dans sa position la plus étendue hors du corps. La tige d'actionnement 32 définit intérieurement un canal de refoulement pour le produit fluide mis sous pression à l'intérieur du corps 30. Il s'agit là d'une conception tout à fait classique pour une pompe ou une valve dans les domaines de la parfumerie, de la cosmétique ou encore de la pharmacie. Etant donné que la structure interne de l'organe de distribution 3 n'est pas critique pour la présente invention, elle ne sera pas plus amplement décrite.

Le poussoir 4 est monté sur l'extrémité libre de la tige d'actionnement 32 de l'organe de distribution 3. Le produit fluide issu de la tige d'actionnement 32 est conduit par un canal interne jusqu'à un orifice de distribution 42 formé par le poussoir. D'autre part, le poussoir comprend une surface d'appui 41 sur laquelle l'utilisateur peut appuyer à l'aide d'un ou de plusieurs doigts pour déplacer le poussoir 4 axialement en va-et-vient. De cette manière, du produit fluide, sous forme dosée ou non, est distribué à travers l'orifice de distribution 42. Là encore, il s'agit d'une conception tout à fait classique pour un distributeur de produit fluide.

L'organe de fixation comprend deux éléments constitutifs distincts, à savoir une bague de fixation 5 et une frette de blocage 6. La frette 6 est engagée autour de la bague 5 de manière à la masquer totalement ou partiellement. Un but de la frette 6 est de déformer la bague 5 radialement vers l'intérieur et de la maintenir dans cet état.

La bague 5 est avantageusement réalisée dans un matériau plastique déformable et malléable permettant de créer des zones facilement déformables, alors que d'autres zones sont plus rigides. La bague 5 présente une configuration globale sensiblement cylindrique de révolution autour de l'axe du distributeur. La bague 5 est de préférence réalisée de manière monobloc, mais on peut distinguer trois parties remplissant chacune une fonction distincte.

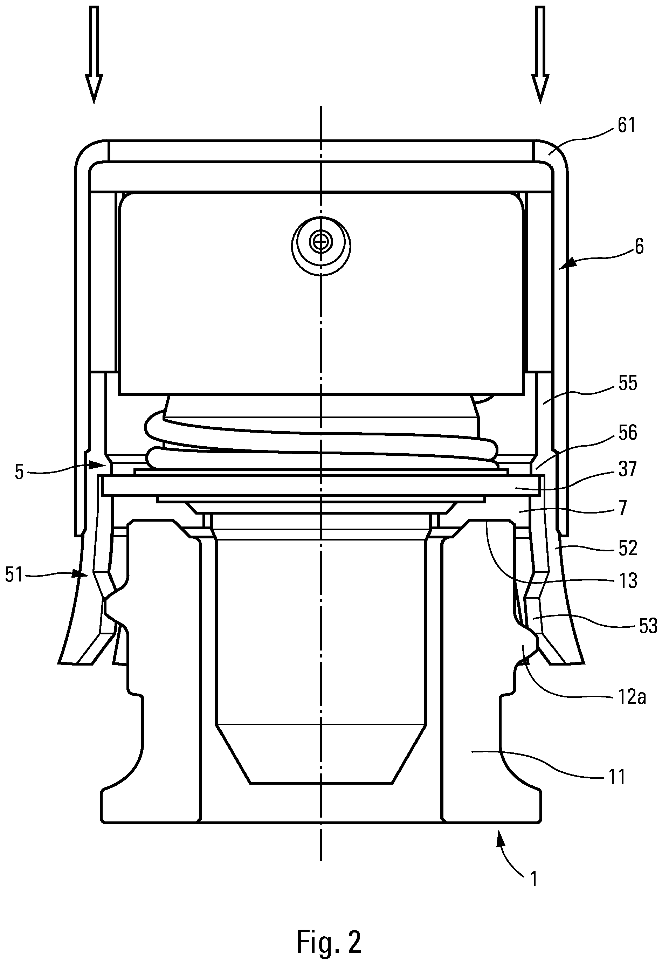

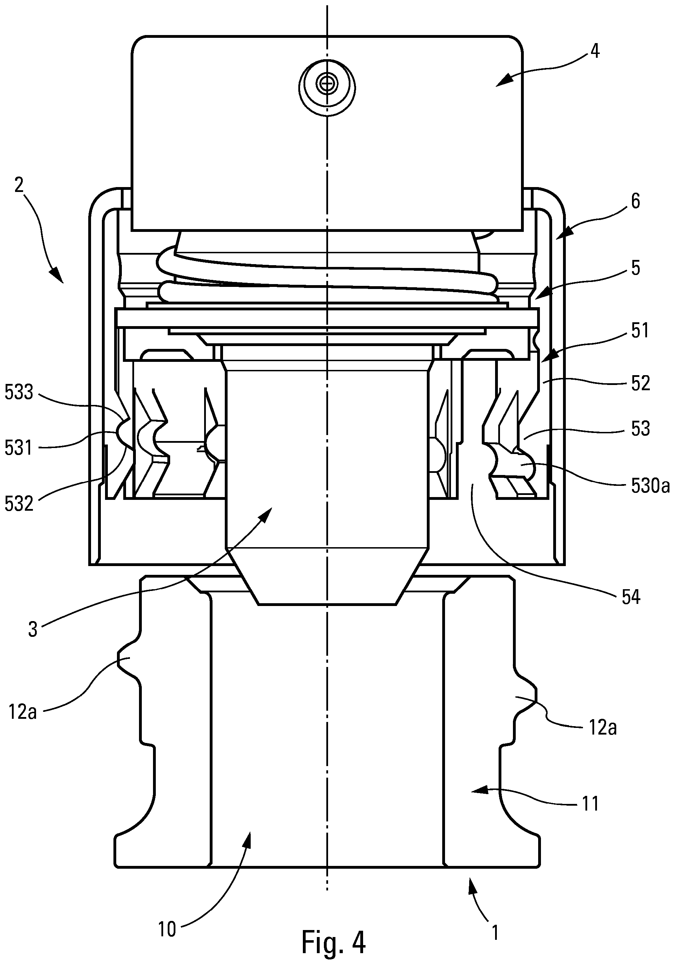

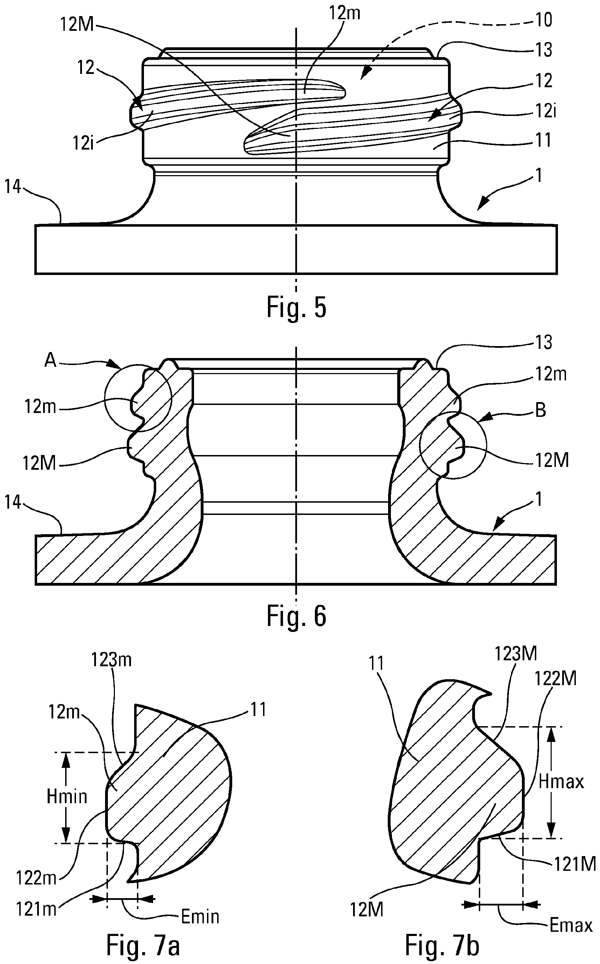

Ainsi, la bague comprend une jupe 51 qui est destinée à venir en prise autour du col fileté 11 du réservoir. La jupe 51 s'étend par conséquent autour du col 11 jusqu'en dessous des filets 12a en position montée, comme représentée sur les figures 4 et 5. La jupe 51 peut être continue sur toute sa périphérie de manière à former un cylindre complet. En variante préférentielle, comme représentée sur les figures, la jupe 51 forme des pattes souples 52 qui sont séparées par des fentes radiales 54. Ceci est clairement visible sur la figure 1. Le nombre de pattes 52 peut varier de trois à plus d'une dizaine. Sur les figures, la jupe 51 forme six pattes souples 52 séparées par six fentes radiales 54. Les fentes 54 peuvent s'étendre sur toute ou partie de la hauteur de la jupe 51. En d'autres termes, une partie de la jupe peut rester continue alors qu'une autre partie inférieure est fendue pour former les pattes. Sur les figures, la jupe 51 est fendue sur toute sa hauteur. Du fait que la jupe 51 est fendue, les pattes 52 présentent une grande souplesse, notamment dans la direction radiale. Elles peuvent ainsi être librement déformées vers l'extérieur et vers l'intérieur sans risque de les abîmées. La paroi interne des pattes (ou de la jupe) peut être parfaitement lisse, ou au contraire, en variante préférentielle, les pattes sont formées avec des bossages 53 qui font saillie radialement vers l'intérieur. Les bossages 53 sont situés à proximité de l'extrémité inférieure libre des pattes 52. Les bossages 53 sont de préférences minces et allongés dans le sens axial. Ils se présentent ainsi sous la forme de petites nervures ou barrettes verticales séparées. Les bossages 53 peuvent présenter des chants d'attaque biseautés pour favoriser la mise en place de la bague sur le col du réservoir. On peut par exemple prévoir deux ou trois bossages par pattes. Il est aussi envisageable de ne prévoir qu'un seul bossage par patte qui s'étend sur toute ou partie de la largeur radiale de la patte. Sur les figures, il y a deux bossages par patte, et six pattes, ce qui fait un total de douze bossages pour la jupe 51. Les bossages 53 sont disposés au niveau de la jupe 51 de manière à venir se positionner au niveau des filets 12a, comme on peut le voir sur les figures 2 à 5. Les bossages 53 sont destinés à être déformés plastiquement contre les filets 12a du col 11, comme on le verra ci-après.

En plus de la jupe 51, la bague 5 forme également une douille de guidage et de préassemblage 55 qui s'étend vers le haut dans le prolongement de la jupe 51. La douille 55 présente une configuration sensiblement cylindrique avec un diamètre approprié pour recevoir la frette 6, comme on le verra ci-après.

Au niveau de la jonction entre la douille 55 et la jupe 51, la bague 5 forme une bride d'appui 56 qui fait saillie radialement vers l'intérieur. Cette bride 56, qui peut être continue sur toute la périphérie, ou au contraire interrompue, est destinée à venir en prise avec la collerette 37 du corps 30 de l'organe de distribution 3 pour la pousser vers le bord supérieur 13 du col 11, avec un joint de col 7 éventuellement interposé. Ainsi, la poussée de la bride 56 sur la collerette 37 a pour effet de comprimer le joint de col 7 sur le bord annulaire 13 du col 11. Une étanchéité parfaite est ainsi assurée entre l'organe de distribution 3 et le col 11. L'état de compression du joint 7 est uniquement assuré par la presse utilisée pour le montage de la tête de distribution, et non pas de la déformation de la jupe 51, comme c'est le cas avec les organes de fixation de l'art antérieur.

La frette de blocage 6 peut être une frette esthétique visible, ou au contraire une frette interne invisible. Sur les figures, la frette 6 est une frette d'habillage visible qui peut par exemple être réalisée en métal. La frette 6 est globalement cylindrique avec un rabat rentrant supérieur 61 destiné à venir en butée sur l'extrémité supérieure libre de la douille 55. Le diamètre interne de la frette 6 est légèrement inférieur ou égal au diamètre extérieur de la bague 5. Ainsi, la frette 6 va contraindre et maintenir la bague 5 dans une configuration sensiblement cylindrique et bloquée.

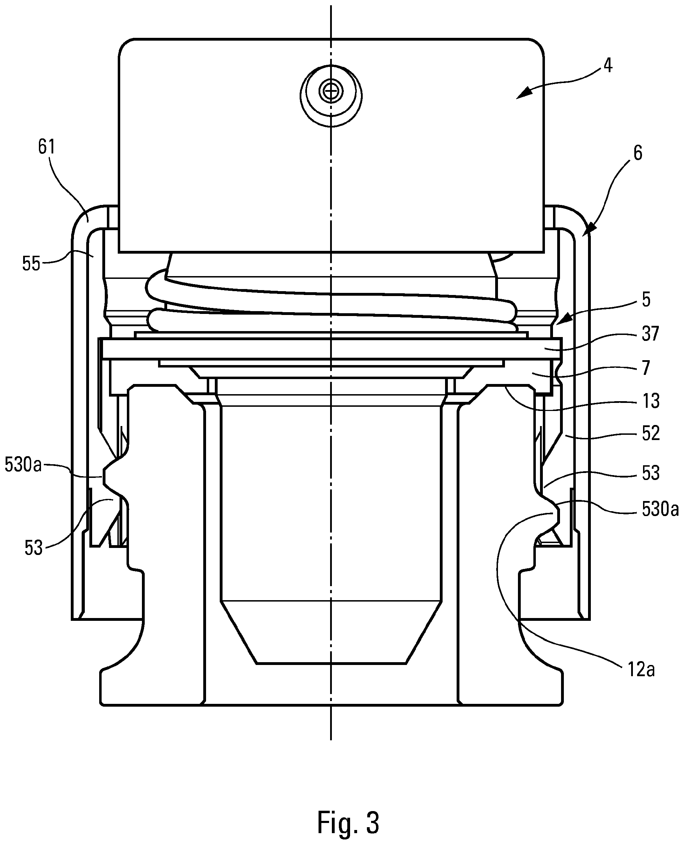

On se référera maintenant consécutivement aux différentes figures dans l'ordre pour décrire un cycle de montage et de démontage d'une tête de distribution sur un col de réservoir fileté. Sur la figure 1, la tête de distribution 2 n'est pas encore en prise avec le col 11. Les pattes 52 de la jupe 51 s'étendent alors de manière parfaitement cylindrique sans subir aucune déformation. La frette 6 est préengagée autour de la bague 5 au niveau de la douille 55. Ainsi, la bague 5 et la frette 6 constituent un sous-ensemble unitaire inséparable, et donc imperdable. De plus, la douille 55 permet de maintenir et de guider la frette 6 parfaitement axialement. Il est à noter que la frette 6 n'est pas encore engagée autour de la jupe 51. La première étape de montage consiste à engager la jupe 51 autour du col fileté 11. Ceci est représenté sur la figure 2. L'organe de distribution 3 étant alors engagé à l'intérieur de l'ouverture 10 du col. Le joint 7 disposé sous la collerette 37 est alors en contact du bord supérieur 13 du col 11. Les bossages 53 formés au niveau des pattes 52 sont disposés au niveau des filets 12a. On peut remarquer que les pattes 52 sont légèrement déformées vers l'extérieur, du fait que les bossages 53 viennent en contact avec les filets 12a. Les bossages 53 ne sont pas encore déformés contre les filets 12a. La troisième étape de montage consiste à abaisser la frette 6 autour de la bague 5. Ceci s'effectue en exerçant une pression sur le rabat rentrant 61 de la frette 6. Cette pression permet d'écraser le joint de col 7 pour assurer l'étanchéité. La frette 6 commence ainsi à s'engager autour de la jupe 51. Les bossages 53 commencent à être appuyés fortement contre les filets 12a. L'opération d'abaissement ou d'engagement de la frette 6 autour de la bague 5 continue jusqu'à ce que la frette 6 entoure complètement la bague 5, comme représenté sur la figure 3. Ceci correspond à la position finale de montage, dans laquelle les bossages 53 des pattes 52 sont déformés contre les filets 12a de manière à créer des empreintes de filets 530a dans la matière constitutive des bossages 53. Dans cette position finale de montage, le rabat rentrant 61 est en butée sur l'extrémité supérieure de la douille 55. Il est également possible de déterminer la position de finale de montage lorsque l'extrémité inférieure de la frette 6 vient en contact de butée avec l'épaulement du réservoir. Il suffit pour cela de prévoir une frette légèrement plus haute. Du fait que les filets 12a s'étendent de manière hélicoïdale, l'empreinte de filets 530a est formée à des niveaux axiaux différents sur les différents bossages 53. Par exemple, sur la figure 3, le filet 12a dans la partie droite forme une empreinte 530a à proximité de l'extrémité inférieure du bossage 53, alors que sur la partie gauche, l'empreinte 530a est formée vers le haut du bossage 53. Avantageusement, les filets ne viennent en contact de la jupe 51 qu'au niveau des bossages 53. Ainsi, le contact entre la jupe et le col n'est que partiel sur la périphérie, et s'étend de préférence sur moins de la moitié de la périphérie du col. Ceci est le cas étant donné qu'il n'y a que douze bossages 53 répartis sur la périphérie. Ce contact interrompu permet de réduire considérablement les forces de frottement entre la jupe et le col, permettant ainsi un dévissage manuel de la tête de distribution. Le couple de torsion est appliqué directement sur la frette 6 qui est en contact serré avec la bague 5. En effet, le contact entre la frette et la bague s'étend sur toute la périphérie et avantageusement presque sur toute la hauteur de la bague. Les frottements entre la bague et la frette sont donc largement supérieurs aux frottements entre les bossages 53 et les filets 12a. Un dévissage est alors autorisé. Une fois l'opération de dévissage terminée, le distributeur est dans la configuration représentée sur la figure 4. On peut alors clairement apercevoir les empreintes de filets 530a qui ont été créées dans les bossages 53. Chaque empreinte 530a comprend un fond d'empreinte 531 bordé par deux flancs d'empreinte opposés 532 et 533. Cela signifie que la formation des empreintes de filets 530a a été faite sans générer de traction sur les pattes 52. En d'autres termes, la poussée radiale vers l'intérieur créée par la frette 6 n'a pas été transformée en une composante de poussée axiale lors du contact des bossages 53 avec les filets 12a. La compression du joint de col 7 est ainsi entièrement obtenue et contrôlée par la force exercée par la presse de montage. De telles empreintes 530a ont pu être réalisées du fait que les bossages s'étendent de part et d'autres des filets 12a. Il n'y a donc pas d'effet de came ou de transformation d'orientation de force lors de la déformation des bossages 53. La déformation des bossages 53 est une déformation plastique par déplacement de matière instantanée et/ou ultérieure, notamment par fluage. En effet, on sait que les matériaux plastiques ont tendances à fluer dans le temps pour atteindre un état de déformation final. Dans le cadre de la présente invention, ce phénomène de fluage est mis à profit étant donné qu'il se passe une période de temps relativement longue entre le montage du distributeur et le dévissage de la tête de distribution, lorsque le réservoir est vide. Les empreintes de filets 530, une fois la tête distribution dévissée, vont rester dans cet état pour former un filet complémentaire définitif. La matière plastique constitutive des bossages 51 ne va pas se déformer en retour par mémoire de forme, étant donné que la matière a flué sur une longue période.

Grâce à l'organe de fixation du document WO2009/150351, il est possible de fixer une tête de distribution sur un réservoir à col fileté sans effectuer d'opération de vissage, tout en permettant le dévissage de la tête, pour permettre le recyclage du distributeur en séparant le réservoir de sa tête de distribution.

Le revissage de la tête de distribution sur le col fileté n'était pas un objectif du document WO2009/150351 : il suffisait que la tête puisse être retirée par dévissage. Le revissage est une exigence nouvelle qui répond aux objectifs de durabilité, puisqu'il permet à l'utilisateur de pouvoir remplir le réservoir et de remettre la tête de distribution en place. On s'est aperçu que le revissage n'est pas possible avec l'organe de fixation et le col fileté du document WO2009/150351, car les empreintes de filet 530a formées par col fileté dans la jupe 51 sont en contact « trop » intime avec les filets 12a du col.

La présente invention apporte une amélioration ou perfectionnement au dispositif du document WO2009/150351 visant à permettre un revissage aisé, mais aussi pour faciliter le dévissage, sans pour autant changer quoi que ce soit au procédé de montage et à l'organe de fixation du document WO2009/150351. La modification se situe uniquement au niveau des filets 12a du col fileté 11 : cela implique que la bague de l'invention est identique à celle du document WO2009/150351, excepté au niveau des empreintes de filet qui sont créées par le filetage du col. Alors que les filets 12a du document WO2009/150351 sont constants sur toute leur longueur, c'est-à-dire que leur section transversale verticale est inchangée sur leur longueur, les filets 12 de l'invention présentent une section transversale qui décroit dans le sens du dévissage ou croit dans le sens du vissage, de telle sorte que le couple de dévissage décroit et le couple de revissage croit. Ceci est déjà visible sur les figures 5 et 6, ou l'on voit que les filets sont plus « fins » ou plus « étroits » à mesure qu'ils se rapprochent du bord annulaire supérieur 13. A l'inverse, on peut dire que les filets 12 sont plus « gros » ou plus « large » à mesure qu'ils se rapprochent de l'épaulement 14. On peut aussi dire que les filets 12 s'effilent ou s'amincissent du bas vers le haut, ou de l'épaulement 14 vers le bord annulaire supérieur 13. Leur section transversale décroit vers le haut. Cette réduction de section peut être due à une diminution de leur hauteur axiale et/ou de leur épaisseur radiale. Cette réduction peut être continue sur toute la longueur des filets. Elle peut aussi être discontinue et présenter des segments ou portions de filet de section transversale constante. Mais globalement, on peut dire que les filets 12 se réduisent dans le sens du dévissage ou augmentent dans le sens du vissage.

Dans le mode de réalisation des figures 5 et 6, le col 11 comprend deux filets 12 qui s'étendent sensiblement sur un peu plus de la moitié de la périphérie du col : on peut voir qu'ils se chevauchent sur une courte distance. Chaque filet 12 définit une entame de filet supérieure 12m située à proximité du bord 13 et une fin de filet inférieure 12M située à proximité de l'épaulement 14. L'entame 12m et la fin 12M peuvent être définies comme les parties d'extrémité du filet 12 dont la section transversale croit/décroit rapidement. L'entame de filet 12m présente une section transversale minimale et la fin de filet 12M présente une section transversale maximale. Entre ces deux extrémités, le filet 12 forme une portion intermédiaire 12i de section transversale croissante en allant de l'entame de filet 12m vers la fin de filet 12M. La longueur de la portion intermédiaire 12i est bien plus grande que celle de l'entame 12m ou de la fin 12M. Dans ce mode de réalisation, la variation de section transversale est constante et progressive sur toute la longueur de la portion intermédiaire 12i. Ainsi, le filet hélicoïdal 12, au niveau de la jonction entre la fin de filet inférieure 12M et la portion intermédiaire 12i, présente une section transversale maximale.

Sur la figure 7a, on voit que l'entame de filet 12m définit une hauteur axiale Hmin et une épaisseur radiale Emin par rapport au restant du col 11 qui est globalement cylindrique. L'entame de filet 12m présente une forme sensiblement trapézoïdale, avec deux flancs latéraux inclinés 121m et 123m et un sommet sensiblement plat et cylindrique 122m, de sorte que le filet hélicoïdal 12 présente une section transversale de configuration générale trapue. A titre purement indicatif, Hmin peut être de l'ordre de 1,2 mm et Emin peut être de l'ordre de 0,3 mm à 0,5 mm.

Sur la figure 7b, on voit que la fin de filet 12M définit une hauteur axiale Hmax et une épaisseur radiale Emax. La fin de filet 12M présente aussi une forme sensiblement trapézoïdale, avec deux flancs latéraux inclinés 121M et 123M et un sommet sensiblement plat et cylindrique 122M, de sorte que le filet hélicoïdal 12 présente aussi une section transversale de configuration générale trapue. A titre purement indicatif, Hmax peut être de l'ordre de 1,5 mm et Emax peut faire 0,2 mm de plus que Emin, à savoir entre 0,5 et 0,7 mm.

Ainsi, la hauteur axiale peut varier d'au moins 20% et l'épaisseur radiale peut varier d'au moins 30% et de préférence de 50%.

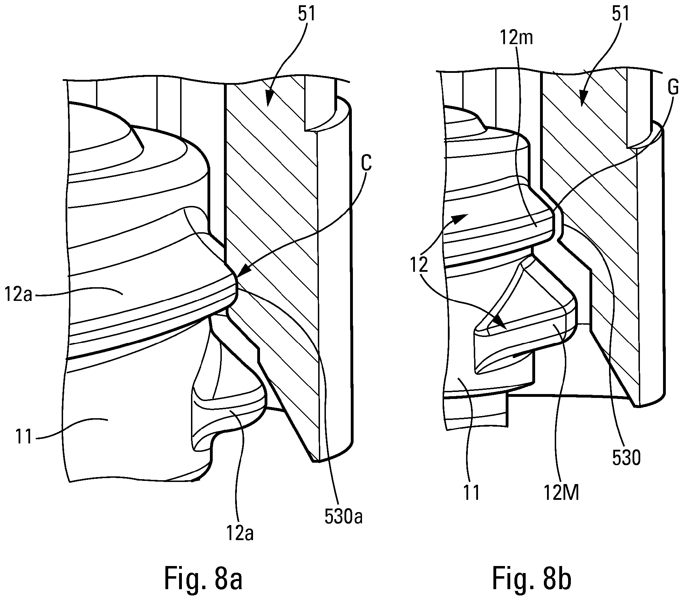

Sur la figure 8a, on est dans le contexte du document WO2009/150351, avec des filets 12a constants et des empreintes de filets 530a correspondantes. Lors du revissage, les empreintes 530a vont directement venir en contact intime et appuyé C avec les filets 12a : on peut même dire que la jupe 51 va venir en buter contre les filets 12a et rendre l'initiation du revissage presque impossible. En pratique, il est très laborieux, voire impossible, de trouver l'engagement des filets 12a dans les empreintes 530a. Après plusieurs tentatives infructueuses, la plupart des utilisateurs renoncent à revisser la tête de distribution sur le col fileté.

Sur la figure 8b, on est dans le contexte de l'invention, avec des filets 12 croissants et des empreintes de filets 530 correspondantes. Lors du revissage, les empreintes 530 vont s'engager facilement autour des filets 12a en raison du jeu G existant entre elles : ce jeu G provient du fait que les empreintes 530 de section maximale s'engagent autour des entames de filet 12m de section minimale. En pratique, il est très aisé de trouver l'engagement des filets 12 dans les empreintes 530 de la jupe 51. Le couple de vissage est alors presque nul, mais il va augmenter progressivement à mesure du revissage. En fin de revissage, le couple sera maximal, puisque les empreintes 530 vont venir en contact intime avec les filets 12 qui les ont formées. L'engagement mutuel des filets 12 dans les empreintes 530 peut s'apparenter à un contact cône dans cône, étant donné qu'ils sont tous deux coniques ou effilés.

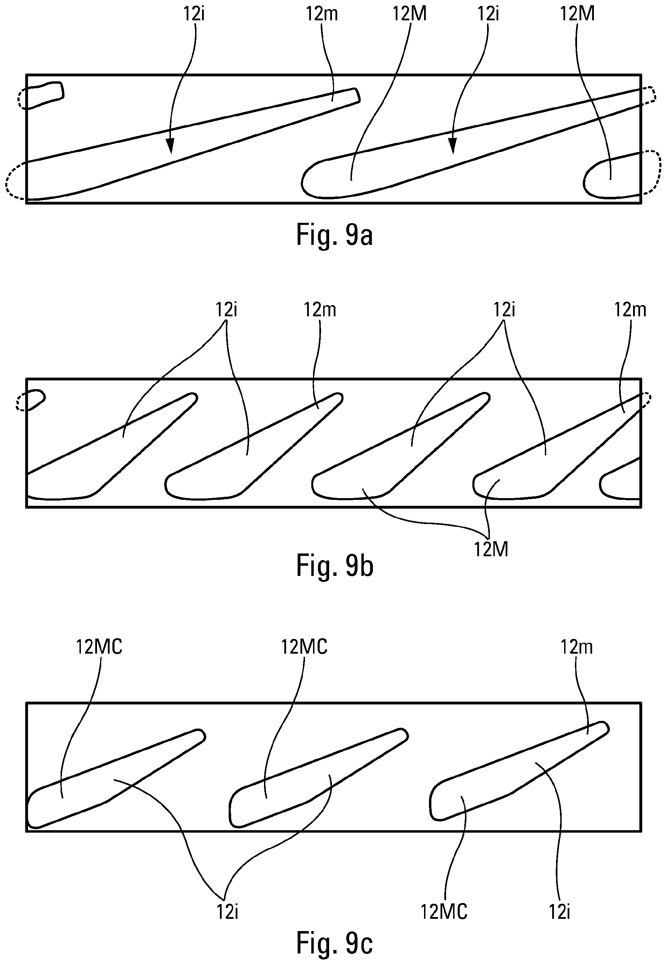

Les figures 9a, 9b et 9c illustrent différents cols que l'on a déroulés à plat pour voir l'intégralité des filets 12.

Le col 11 de la figure 9a comprend trois filets 12 qui se chevauchent un peu. Chaque filet définit une entame de filet 12m de section réduite et une fin de filet 12M de section accrue. La variation de section de la portion intermédiaire 12i est constante, continue et progressive sur toute sa longueur.

Le col 11 de la figure 9b comprend quatre filets 12 qui se chevauchent un peu. Chaque filet définit une entame de filet 12m de section réduite et une fin de filet 12M de section accrue. La variation de section de la portion intermédiaire 12i est constante, continue et progressive sur toute sa longueur.

Le col 11 de la figure 9c comprend trois filets 12 qui ne se chevauchent pas. Chaque filet définit une entame de filet 12m de section réduite et une fin de filet 12M de section accrue. La variation de section de la portion intermédiaire 12i est constante, continue et progressive jusqu'à une partie de section constante 12MC dont l'extrémité définit la fin de filet 12M.

Ainsi, on peut dire que la portion intermédiaire 12i présente, sur au moins une partie de sa longueur, une section transversale qui décroit dans le sens du dévissage et croit dans le sens du vissage, de telle sorte que le couple de dévissage décroit et le couple de revissage croit.

Bien que plusieurs filets soient privilégiés, il est tout de même possible de réaliser un col de l'invention avec un seul filet.

Grâce à l'invention définissant des filets de col de section croissante dans le sens du vissage, on peut aisément revisser une tête de distribution qui a été auparavant dévissée et qui a été initialement montée sur le col fileté par serrage radial pour former les empreintes de filet. L'invention, d'un point de vue structurelle, concerne essentiellement la configuration des filets du col, et par conséquent le réservoir, mais les avantages induits par cette configuration particulière des filets de col se manifestent essentiellement au niveau de la coopération entre ce col fileté et la jupe, qui permet non seulement le montage axial initial et le démontage par dévissage, mais surtout un remontage aisé et efficace par revissage. Bien que le réservoir soit le moyen structurel essentiel, c'est la tête de distribution qui permet de réaliser l'invention en association avec le réservoir.

## Revendications

1. Distributeur de produit fluide comprenant :
- un réservoir de produit fluide (1) avantageusement réalisé en verre et pourvu d'un col (11) fileté extérieurement et définissant intérieurement une ouverture (10) communiquant avec l'intérieur du réservoir, le col (11) formant au moins un filet hélicoïdal (12), qui comprend une entame de filet supérieure (12m), une fin de filet inférieure (12M) et une portion intermédiaire (12i),
- une tête de distribution (2) montée sur le col (11) du réservoir (1), la tête (2) comprenant un organe de distribution (3), tel qu'une pompe ou une valve, un poussoir (4) pour actionner l'organe de distribution (3) et un organe de fixation (5, 6) en prise à la fois avec le col fileté (11) du réservoir (1) et l'organe de distribution (3), l'organe de fixation (5, 6) comprenant :
- une jupe déformable et malléable (51) destinée à venir en prise avec le col fileté (11), et
- une frette rigide (6) engagée autour de la jupe (51) pour pousser radialement la jupe contre le col fileté (11) de manière à déformer la jupe (51) contre le filet (12) pour créer une empreinte de filet (530) dans la jupe,
**caractérisé en ce que** la portion intermédiaire (12i) présente, sur au moins une partie de sa longueur, une section transversale qui décroit dans le sens du dévissage et croit dans le sens du vissage, de telle sorte que le couple de dévissage décroit et le couple de revissage croit.

2. Distributeur selon la revendication 1, dans lequel au moins la moitié de la longueur de la portion intermédiaire (12i) présente une section transversale qui décroit dans le sens du dévissage et croit dans le sens du vissage, de telle sorte que le couple de dévissage décroit et le couple de revissage croit.

3. Distributeur selon la revendication 1 ou 2, dans lequel le filet hélicoïdal (12), au niveau de la jonction entre la fin de filet inférieure (12M) et la portion intermédiaire (12i), présente une section transversale maximale.

4. Distributeur selon l'une quelconque des revendications précédentes, dans lequel la portion intermédiaire (12i) comprend une partie inférieure (12MC) de section transversale maximale constante.

5. Distributeur selon l'une quelconque des revendications précédentes, dans lequel la portion intermédiaire (12i) présente une hauteur axiale et une épaisseur radiale, au moins l'une de ces deux grandeurs décroit dans le sens du dévissage et croit dans le sens du vissage.

6. Distributeur selon la revendication 5, dans lequel la hauteur axiale varie d'au moins 20%, avantageusement entre 1 mm et 1,5 mm.

7. Distributeur selon la revendication 5 ou 6, dans lequel l'épaisseur radiale varie d'au moins 30% et de préférence de 50%, avantageusement entre 0,4 mm et 0,6 mm.

8. Distributeur selon la revendication 5, 6 ou 7, dans lequel le rapport de la hauteur axiale à l'épaisseur radiale est de l'ordre de 2 à 3.

9. Distributeur selon l'une quelconque des revendications précédentes, dans lequel le col (11) comprend au moins deux filets hélicoïdaux (12), avantageusement trois ou quatre.

10. Distributeur selon la revendication 9, dans lequel les filets hélicoïdaux (12) se chevauchent.

11. Distributeur selon l'une quelconque des revendications précédentes, dans lequel ledit au moins un filet hélicoïdal (12) comprend deux flancs latéraux inclinés (121m ; 121M, 123m ; 123M) et un sommet (122m ; 122M) sensiblement plat et cylindrique, de sorte que le filet hélicoïdal (12) présente une section transversale de configuration générale trapue.

12. Distributeur selon l'une quelconque des revendications précédentes, dans lequel la jupe (51) est réalisée en une matière plastique et les filets hélicoïdaux (12) sont en verre, la jupe (51) comprenant des pattes souples (52) séparées par des fentes (54), chaque patte souple (52) étant pourvue intérieurement d'au moins un bossage (53) destiné à être déformé par le filet hélicoïdal (12) du col (11), les bossages (53) étant allongés et s'étendent transversalement au filet hélicoïdal (12).

## Patentansprüche

1. Fluidproduktspender umfassend:
- einen Fluidprodukt-Vorratsbehälter (1), der vorteilhafterweise aus Glas hergestellt ist und mit einem Hals (11) versehen ist, der außen ein Gewinde aufweist und innen eine Öffnung (10) definiert, die mit dem Inneren des Vorratsbehälters in Verbindung steht, wobei der Hals (11) wenigstens ein schraubenförmiges Gewinde (12) bildet, das einen oberen Gewindeanfang (12m), ein unteres Gewindeende (12M) und einen Zwischenabschnitt (12i) umfasst,
- einen Abgabekopf (2), der auf dem Hals (11) des Vorratsbehälters (1) angebracht ist, wobei der Kopf (2) ein Abgabeelement (3) wie etwa eine Pumpe oder ein Ventil, einen Drücker (4) zur Betätigung des Abgabeelements (3) und ein Befestigungselement (5, 6) umfasst, das sowohl mit dem Gewindehals (11) des Vorratsbehälters (1) als auch mit dem Abgabeelement (3) in Eingriff steht, wobei das Befestigungselement (5, 6) Folgendes umfasst:
- einen verformbaren und formbaren Mantel (51), der dazu bestimmt ist, mit dem Gewindehals (11) in Eingriff zu treten, und
- eine starre Umreifung (6), die sich um den Mantel (51) herum in Eingriff befindet, um den Mantel radial gegen den Gewindehals (11) zu drücken, so dass der Mantel (51) gegen das Gewinde (12) verformt wird, um einen Gewindeabdruck (530) im Mantel zu erzeugen,
**dadurch gekennzeichnet, dass** der Zwischenabschnitt (12i) auf wenigstens einem Teil seiner Länge einen Querschnitt aufweist, der in Aufschraubrichtung abnimmt und in Zuschraubrichtung zunimmt, so dass das Aufschraubmoment abnimmt und das Wiederzuschraubmoment zunimmt.

2. Spender Nach Anspruch 1, wobei wenigstens die Hälfte der Länge des Zwischenabschnitts (12i) einen Querschnitt aufweist, der in Aufschraubrichtung abnimmt und in Zuschraubrichtung zunimmt, so dass das Aufschraubmoment abnimmt und das Wiederzuschraubmoment zunimmt.

3. Spender nach Anspruch 1 oder 2, wobei das schraubenförmige Gewinde (12) im Bereich der Verbindung zwischen dem unteren Gewindeende (12M) und dem Zwischenabschnitt (12i) einen maximalen Querschnitt aufweist.

4. Spender nach einem der vorhergehenden Ansprüche, wobei der Zwischenabschnitt (12i) einen unteren Abschnitt (12MC) mit konstantem maximalen Querschnitt umfasst.

5. Spender nach einem der vorhergehenden Ansprüche, wobei der Zwischenabschnitt (12i) eine axiale Höhe und eine radiale Dicke aufweist, wobei wenigstens eine dieser zwei Größen in Aufschraubrichtung abnimmt und in Zuschraubrichtung zunimmt.

6. Spender nach Anspruch 5, wobei die axiale Höhe um wenigstens 20 %, vorteilhafterweise zwischen 1 mm und 1,5 mm variiert.

7. Spender nach Anspruch 5 oder 6, wobei die radiale Dicke um wenigstens 30 % und vorzugsweise um 50 %, vorteilhafterweise zwischen 0,4 mm und 0,6 mm variiert.

8. Spender nach Anspruch 5, 6 oder 7, wobei das Verhältnis der axialen Höhe zur radialen Dicke in der Größenordnung von 2 bis 3 liegt.

9. Spender nach einem der vorhergehenden Ansprüche, wobei der Hals (11) wenigstens zwei schraubenförmige Gewinde (12), vorteilhafterweise drei oder vier umfasst.

10. Spender nach Anspruch 9, wobei sich die schraubenförmigen Gewinde (12) überlappen.

11. Spender nach einem der vorhergehenden Ansprüche, wobei das wenigstens eine schraubenförmige Gewinde (12) zwei geneigte Seitenflanken (121m; 121M, 123m; 123M) und einen im Wesentlichen flachen und zylinderförmigen Scheitelpunkt (122m; 122M) umfasst, so dass das schraubenförmige Gewinde (12) einen Querschnitt aufweist, der allgemein gedrungen ausgebildet ist.

12. Spender nach einem der vorhergehenden Ansprüche, wobei der Mantel (51) aus einem Kunststoff hergestellt ist und die schraubenförmigen Gewinde (12) aus Glas sind, wobei der Mantel (51) biegsame Laschen (52) umfasst, die durch Schlitze (54) getrennt sind, wobei jede biegsame Lasche (52) innen mit wenigstens einer Erhebung (53) versehen ist, die dazu bestimmt ist, von dem schraubenförmigen Gewinde (12) des Halses (11) verformt zu werden, wobei die Erhebungen (53) länglich sind und sich quer zum schraubenförmigen Gewinde (12) erstrecken.

## Claims

1. A fluid product dispenser comprising:
a fluid product vessel (1) advantageously made of glass and provided with an externally threaded neck (11) and internally defining an opening (10) communicating with the inside of the vessel, the neck (11) forming at least one helical thread (12), which comprises an upper thread start (12m), a lower thread end (12M) and an intermediate portion (12i),
- a dispensing head (2) mounted on the neck (11) of the vessel (1), the head (2) comprising a dispensing member (3), such as a pump or a valve; a pusher (4) for actuating the dispensing member (3); and a fastening member (5, 6) engaged both with the threaded neck (11) of the vessel (1) and with the dispensing member, the fastening member (5, 6) comprising:
- a deformable and malleable skirt (51) intended to engage with the threaded neck (11), and
- a rigid collar (6) that is engaged around the skirt (51) so as to push the skirt radially against the threaded neck (11) in such a manner as to deform the skirt (51) against the thread (12) so as to create a thread imprint (530) in the skirt,
**characterized in that** the intermediate portion (12i) has, over at least part of its length, a cross-section which decreases in the unscrewing direction and increases in the screwing direction, so that the unscrewing torque decreases and the rescrewing torque increases.

2. The dispenser according to claim 1, wherein at least half of the length of the intermediate portion (12i) has a cross-section which decreases in the unscrewing direction and increases in the screwing direction, such that the unscrewing torque decreases and the rescrewing torque increases.

3. The dispenser according to claim 1 or claim 2, wherein the helical thread (12), at the junction between the lower thread end (12M) and the intermediate portion (12i), has a maximum cross-section.

4. The dispenser according to any preceding claim, wherein the intermediate portion (12i) includes a bottom portion (12MC) of constant maximum cross-section.

5. The dispenser according to any preceding claim, wherein the intermediate portion (12i) has an axial height and a radial thickness, at least one of these two sizes decreases in the unscrewing direction and increases in the screwing direction.

6. The dispenser according to claim 5, wherein the axial height varies by at least 20%, advantageously between 1 mm and 1.5 mm.

7. The dispenser according to claim 5 or claim 6, wherein the radial thickness varies by at least 30% and preferably by 50%, advantageously between 0.4 mm and 0.6 mm.

8. The dispenser according to claim 5, 6 or 7, wherein the ratio of axial height to radial thickness is from about 2 to 3.

9. The dispenser according to any one of the preceding claims, wherein the neck (11) comprises at least two helical threads (12), advantageously three or four.

10. The dispenser according to claim 9, wherein the helical threads (12) overlap.

11. The dispenser according to any one of the preceding claims, wherein said at least one helical thread (12) comprises two inclined lateral flanks (121m; 121M, 123M; 123M) and a substantially flat and cylindrical top (122m; 122M), such that the helical thread (12) has a cross-section of generally short configuration.

12. The dispenser according to any one of the preceding claims, wherein the skirt (51) is made of a plastic material and the helical threads (12) are made of glass, the skirt (51) including flexible tabs (52) that are separated by slots (54), each flexible tab (52) being provided internally with at least one bead (53) intended to be deformed by the helical thread (12) of the neck (11), the beads (53) being elongate and extending transversely to the helical thread (12).
